# EUROPÄISCHE PATENTSCHRIFT

(11) **EP 0 680 587 B1**
(45) Veröffentlichungstag und Bekanntmachung des Hinweises auf die Patenterteilung: **04.09.1996**
(21) Anmeldenummer: 94904910.0
(22) Anmeldetag: 24.01.1994
(51) Int. Cl.: F24H 9/12

(54) **HEIZKÖRPERVENTIL**
HEATING RADIATOR VALVE
VANNE POUR CORPS DE CHAUFFE

(30) Priorität: 26.01.1993 AT 124/93
(43) Veröffentlichungstag der Anmeldung: 08.11.1995
(73) Patentinhaber: Herz Armaturen Aktiengesellschaft, A-1232 Wien (AT)
(72) Erfinder: TOTH, Hans-Peter, A-1222 Wien (AT)
(74) Vertreter: Brauneiss, Leo, Dipl.Ing.
(86) Internationale Anmeldenummer: AT9400005
(87) Internationale Veröffentlichungsnummer: WO9417339

(56) Entgegenhaltungen:
- EP-A- 0 169 944
- DE-C- 4 011 111
- DE-U- 9 102 149
- FR-A- 2 639 084

## Beschreibung

Die Erfindung bezieht sich auf ein Heizkörperventil zum Anschluß an einen Anschlußstutzen eines Heizkörpers oder einer das Heizmedium zu zumindest einem Heizkörperteil führenden Armatur, mit einem am Anschlußstutzen abschraubbaren Einsatzkörper, der einen in seinem Inneren angeordneten Ventilsitz umgibt, mit welchem ein, vorzugsweise thermostatisch betätigter, Verschlußkörper zusammenwirkt, wobei der Ventilsitz und der Verschlußkörper rotationssymmetrisch zur Achse des Einsatzkörpers ausgebildet sind und bei geöffnetem Ventil einen ringförmigen Austrittsspalt für das Heizmedium begrenzen, durch welchen das Heizmedium in eine im Einsatzkörper vorgesehene, den Verschlußkörper aufnehmende Kammer strömt, und wobei das Heizmedium dem Ventilsitz über einen zur Achse des Einsatzkörpers koaxialen, hohlen, den Ventilsitz bildenden Fortsatz des Einsatzkörpers aus einem Zuströmkanal des Heizkörpers bzw. der Armatur zugeleitet wird und das Heizmedium nach Durchströmen des Ventilsitzes durch eine im Einsatzkörper vorgesehene Rückleitung in axialer Richtung des Einsatzkörpers in eine Verteilerkammer zwischen Anschlußstutzen und Fartsatz bzw. einer Verlängerung desselben geleitet wird.

Derartige Heizkörperventile sind bekannt (DE-A-3 838 205). Sie ermöglichen es, das Heizkörperventil an unterschiedliche Heizkörperarten bzw. deren Armaturen zu montieren, auch an Doppelplattenheizkörpern, deren beide Heizplatten von einem gemeinsamen Zulaufkanal aus mit Heizwasser versorgt werden. Bei der bekannten Konstruktion ragt der einstückig mit dem Fortsatz ausgebildete, in den Anschlußstutzen eingeschraubte Einsatzkörper mit dem Fortsatz längsverschieblich in den Zuströmkanal hinein und ist dort durch eine Ringdichtung gegenüber dem Zustromkanal abgedichtet. Eine weitere Dichtung sitzt zwischen dem Einsatzkörper und dem ihn aufnehmenden Anschlußstutzen. Das durch die Bohrung des Fortsatzes zum Ventilsitz strömende Heizmedium tritt nach Passieren des Ventilsitzes durch eine radial angeordnete Auslaßöffnung der Kammer aus dem Einsatzkörper aus und strömt über die Rückleitung zu einem zwischen den beiden Heizplatten liegenden Verteilerraum. Die Rückleitung ist dadurch gebildet, daß der Ventilsitz und die Auslaßöffnung in der Höhe des Außengewindes des Einsatzkörpers angeordnet sind, mit welchem er in das Innengewinde des Anschlußstutzens eingeschraubt Der Einsatzkörper ist hiebei im Bereich der Auslaßöffnung abgeflacht, wobei das Außengewinde unterbrochen ist.

Diese Konstruktion hat mehrere Nachteile: Zunächst engt die Anordnung der Auslaßöffnung auf der Höhe des Gewindes die Anordnung des Ventilsitzes hinsichtlich seiner axialen Lage im Einsatzkörper ein. Vor allem aber ist die einseitig radiale Ausströmung aus der Kammer ungünstig, weil sie eine erhöhte Erosionsgefahr sowie die Gefahr einer Verstopfung mit sich bringt. Diese Verstopfung wird dadurch begünstigt, daß das Heizmedium an den Gängen des Innengewindes vorbeiströmen muß, welche für die Strömung ein Hindernis darstellen, an welchem sich die Schmutzteilchen festsetzen können. Außerdem werden durch diese Gewindegänge unnötige Turbulenzen in die Strömung des Heizmediums hineingetragen. Solche unnötige Turbulenzen ergeben sich in nachteiliger Weise auch bei einer weiteren bekannten Konstruktion (DE-C-4,011.111), bei welcher ein Einsatzkörper zwischen sich und dem den Ventilsitz bildenden Körper einen Ringspalt begrenzt, aus welchem radiale Austrittsöffnungen für das Heizmedium in eine den Einsatzkörper umgebende Verteilerkammer münden.

Die Erfindung setzt sich zur Aufgabe, eine für unterschiedliche Heizkörperarten anwendbare Heizkörperventilkonstruktion so zu verbessern, daß die Abströmung des Heizmediums nach seinem Durchtritt durch den Ventilsitz verbessert wird und dadurch eine geringere Verschmutzungs- und Erosionsgefahr erzielt wird. Hiebei soll der Vorteil gewahrt bleiben, daß der Ventilsitz im Bereich des Anschlußstutzens angeordnet ist, um standardisierte Bauteile verwenden zu können, etwa zwecks Übergang auf eine anders geartete Heizkörperart. Die Erfindung löst diese Aufgabe dadurch, daß die kammer rotationssymmetrisch zur Achse des Einsatzkörpers ausgebildet ist, wobei mehrere, rund um den Ventilsitz um den Umfang desselben verteilte, die Rückleitung bildende axiale Kanäle im Material des Einsatzkörpers in die Verteilerkammer münden. Dadurch ergibt sich eine günstige gleichmäßige Verteilung des Heizmediums nach seinem Durchtritt durch den Ventilsitz nach allen Richtungen hin, so daß keine Richtung bevorzugt ist, insbesondere wenn gemäß einer bevorzugten Ausführungsform der Erfindung die axialen Kanäle um den Umfang des Ventilsitzes gleichmäßig verteilt sind. An Stelle des einzigen Rückstromkanales der eingangs beschriebenen bekannten Konstruktion treten beim Erfindungsgegenstand eine Mehrzahl bzw. Vielzahl von Kanälen, was die Erosions- und Verstopfungsgefahr wesentlich herabsetzt. Selbst wenn einer oder sogar mehrere dieser Kanäle verstopft sein sollten, so leiten die anderen Kanäle das Heizmedium immer noch zu den Heizkörpern weiter, so daß das Heizkörperventil voll funktionsfähig bleibt. Hiezu kommt, daß der Ventilsitz hinsichtlich seiner axialen Lage im Einsatzkörper dort angeordnet werden kann, wo es für die jeweilige Konstruktion am günstigsten ist, ohne daß eine Abstimmung auf die Lage des den Einsatzkörper im Anschlußstutzen haltenden Gewindes Rücksicht genommen werden muß. Weiters ist vorteilhaft, daß die Kammer im Einsatzkörper rotationssymmetrisch ausgebildet ist, so daß der Arbeitsgang für eine einseitige radiale Austrittsöffnung im Vergleich zur bekannten Konstruktion eingespart wird.

Im Prinzip könnten die Kanäle von axialen Nuten im Außenmantel des Einsatzkörpers gebildet sein. Dies muß nicht unbedingt eine Aufgabe des Vorteils bedingen, daß das Heizmedium nicht an Gewindegängen des Anschlußstutzens vorbeiströmen muß, da ja - wie bereits erwähnt - dieses Gewinde durchaus so angeordnet werden kann, daß die erwähnten Umfangsnuten nicht mehr in den Bereich des Gewindes treffen. Solche Umfangsnuten haben auch den Vorteil, daß sie in einfacher Weise am Mantel des Einsatzkörpers herstellbar sind. Günstiger ist es jedoch, gemäß einer Weiterbildung der Erfindung die Kanäle von Bohrungen zu bilden, die die Wand des Einsatzkörpers in axialer Richtung vom Bereich des Ventilsitzes bis zum inneren Stirnende des im Anschlußstutzen befindlichen Einsatzkörperteiles durchsetzen. Solche Bohrungen sind ebenfalls einfach herstellbar und bilden durch ihre glatten, abgerundeten Wände die geringsten Ansatzpunkte für Verschmutzungen und die besten Strömungsverhältnisse.

Um die Baulänge der vom Thermostat betätigten Bauteile möglichst gering zu halten, ist es zweckmäßig, den Ventilsitz möglichst nahe dem äußeren Ende des Anschlußstutzens anzuordnen. Hiefür ist es im Rahmen der Erfindung günstig, wenn die Kanäle sich über die Länge eines Gewindes hinaus erstrecken, mit welchem der Einsatzkörper in den Anschlußstutzen eingeschraubt ist, wobei der Ventilsitz in Bezug auf das außenseitige Ende dieses Gewindes nach außen versetzt ist. Zweckmäßig ist hiebei erfindungsgemäß der Ventilsitz im Bereich des äußersten Drittels des Anschlußstutzens angeordnet. In Sonderfällen, z.B. wenn die Länge der axialen Rückströmkanäle sehr gering gehalten werden soll, kann jedoch im Rahmen der Erfindung die Anordnung auch so getroffen sein, daß der Ventilsitz und die Kanäle weiter innen angeordnet sind als ein Gewinde, mit welchem der Einsatzkörper im Anschlußstutzen befestigt ist.

Ein weiterer Vorteil der erfindungsgemäßen Konstruktion liegt darin, daß sie universell verwendbar ist für Heizkörperventilkonstruktionen mit oder ohne Voreinstellkörper. Wenn im Rahmen der Erfindung in an sich bekannter Weise ein im Einsatzkörper in axialer Richtung bewegbarer Voreinstellkörper vorgesehen ist, so bietet die Erfindung den Vorteil, daß dieser Voreinstellkörper rotationssymmetrisch in Bezug auf die Achse des Einsatzkörpers ausgebildet ist. Dies ist bei der eingangs beschriebenen bekannten Konstruktion nicht möglich, denn dort muß als Folge der radialen Austrittsöffnung die Wand des Voreinstellkörpers mit einem in Umfangsrichtung ansteigenden Abschnitt ausgebildet sein, wobei die Voreinstellung durch Verdrehung des Voreinstellkörpers um seine Achse erfolgt. Ein solcher Voreinstellkörper erfordert mehr Herstellungsaufwand.

Im Rahmen der Erfindung kann der Voreinstellkörper von einem in die Durchflußöffnung des Ventilsitzes hineinragenden, am Verschlußkörper vorgesehenen Drosselkörper, z.B. einem zylindrischen Fortsatz oder einem Kegelstumpf, gebildet sein. Dadurch ist eine einmalig festgelegte Voreinstellung möglich. Ist hingegen eine Änderung des Voreinstellquerschnittes gewünscht, so wird im Rahmen der Erfindung so vorgegangen, daß der Voreinstellkörper von einer unabhängig vom Verschlußkörper bewegbaren Kappe gebildet ist, deren dem Verschlußkörper zugewendeter, mit dem Ventilsitz zusammenwirkender, den Verschlußkörper umgebender Stirnrand ringförmig geschlossen ausgebildet ist. Die Bewegung dieses Voreinstellkörpers in Achsrichtung des Einsatzkörpers kann dadurch erzielt werden, daß der Voreinstellkörper oder ein mit ihm drehschlüssig verbundener Bauteil ein Gewinde aufweist, wobei die Verdrehung von außen mittels eines Werkzeuges, z.B. eines Schraubenschlüssels od.dgl., erfolgt, so daß eine unbeabsichtigte oder unbefugte Verstellung erschwert wird.

Die Erfindung hat als weiteren Vorteil, daß der das Heizmedium aus dem Zustromkanal zum Ventilsitz führende Fortsatz bzw. die Verlängerung desselben in zahlreichen Varianten ausgebildet werden kann, so daß die Erfindung in dieser Beziehung vielseitigen Konstruktionsänderungen anpaßbar ist. Gemäß einer günstigen Variante im Rahmen der Erfindung ist die Anordnung so getroffen, daß der Fortsatz einstückig mit seinem dem Einsatzkörper abgewendeten Ende dichtend in den Zustromkanal eingreift. Um hiebei zu vermeiden, daß die Herstellung der Rückstrombohrungen durch Vorsprünge des Fortsatzes erschwert wird, ist es erfindungsgemäß zweckmäßig, wenn der maximale Außenradius des Fortsatzes gleich oder geringer ist als der Abstand zwischen der Achse des Einsatzkörpers und dem der Achse nächstliegenden Wandteil der Bohrungen. Hierbei förmig auszubilden und an seinem inneren Ende mit einer Absetzung zu versehen, auf die eine Ringdichtung zwischen zwei sie haltenden Scheiben aufgesetzt ist.

Es ist jedoch im Rahmen der Erfindung auch eine Bauweise möglich, bei welcher ein die Verlängerung des Fortsatzes bildendes Rohr unverschiebbar, z.B. durch ein abgedichtetes Gewinde, Einpressung oder Schweißung, mit dem Zustromkanal verbunden ist oder das Ende des Zustromkanales bildet und mit seinem dem Einsatzkörper zugewendeten Ende in einer zentralen, zum Ventilsitz führenden Bohrung des Fortsatzes längsverschiebbar abgedichtet geführt ist. Insbesondere die Variante, bei welcher der Fortsatz als Ende des Zustromkanales, also einstückig mit diesem ausgebildet ist, ist besonders günstig, da der in der Regel von einem Rohr gebildete Zuströmkanal bei zahlreichen Armaturen ohnedies vorhanden ist, so daß auf einen gesonderten Bauteil verzichtet werden kann. Die Ausbildung der Verlängerung des Fortsatzes als vom Einsatzkörper gesonderter Bauteil hat auch den Vorteil, daß die innere Stirnfläche des Einsatzkörpers vollkommen eben gestaltet werden kann, was die Einarbeitung der Rückstrombohrungen von dieser Stirnfläche aus erleichtert.

Häufig ist es erforderlich, bei einer bereits bestehenden und im Betrieb, d.h. unter Druck, befindlichen Anlage Bauteile zu wechseln, ohne die Anlage entleeren zu müssen. Hiezu ist es bekannt an einem Heizkörperventil eine Kupplung, insbesondere ein Gewinde, vorzusehen, an welches eine Wechselvorrichtung angeschlossen werden kann, mit welcher die nötigen Arbeiten unter Aufrechterhaltung des Druckes des Heizmediums in der Anlage durchgeführt werden können. Die Erfindung bietet hiebei die Möglichkeit, daß der Ventilsitz, sowie eine Kupplung, insbesondere ein Gewinde, zum Anschluß an den Anschlußstutzen und eine weitere Kupplung, insbesondere ein Gewinde, zum Anschluß eines Thermostatkopfes oder einer Wechselvorrichtung am selben einstückigen Einsatzkörper angeordnet sind. Dies bedeutet im Vergleich zur eingangs beschriebenen bekannten Konstruktion die Einsparung eines gesonderten Bauteiles und die Möglichkeit eines einfachen Anschlusses der Wechselvorrichtung. Somit ist ein Ersatz des Ventiloberteiles (Verschlußkörper und Führung) ebenso einfach möglich wie ein Übergang von einer bestimmten Ventiltype auf eine andere Type, z.B. von einem Ventil mit Voreinstellung auf ein solches ohne Voreinstellung oder umgekehrt. Dies ist bei der eingangs bekannten Konstruktion nicht möglich, da dort zwar eine Kupplung für den Anschluß eines Thermostatkopfes vorgesehen ist, jedoch am Ventiloberteil, so daß der Anschluß einer Wechselvorrichtung dort nicht sinnvoll möglich ist.

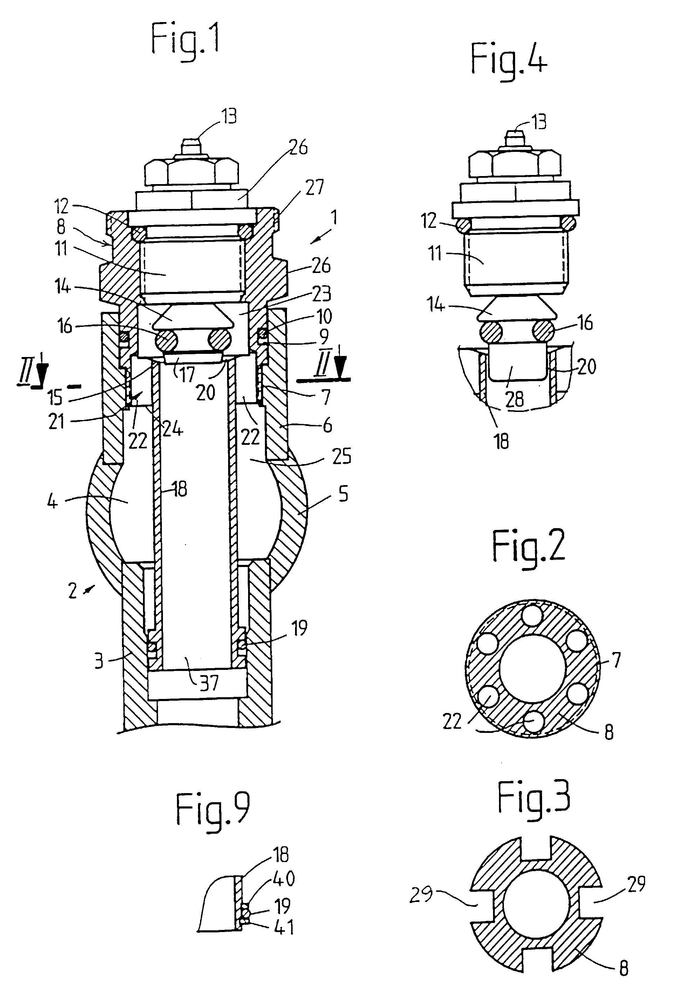

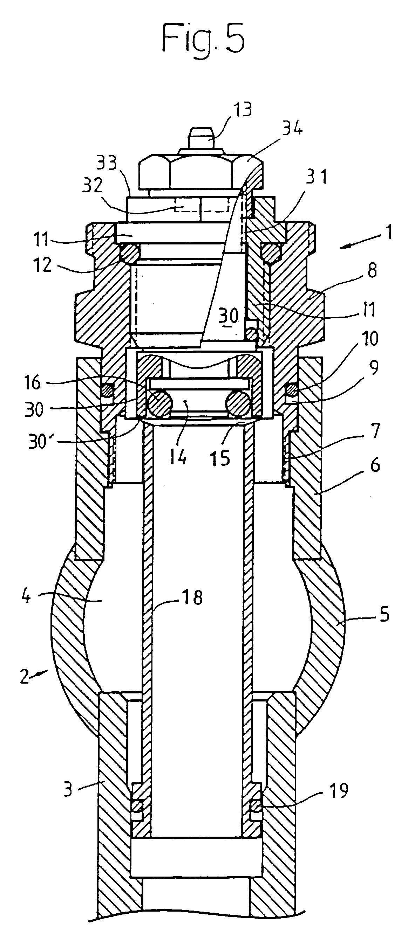

In der Zeichnung ist der Erfindungsgegenstand anhand von Ausführungsbeispielen schematisch dargestellt. Fig.1 zeigt eine erste Ausführungsform eines an einen Anschlußstutzen eines Heizkörpers angebauten Heizkörperventiles im Längsschnitt. Fig.2 ist ein Schnitt nach der Linie II - II der Fig.1. Fig.3 zeigt eine Ausführungsvariante zu Fig.2, ebenfalls im Schnitt. Fig.4 zeigt eine weitere Ausführungsvariante zu Fig.1. Die Fig.5 bis 8 zeigen jeweils eine weitere Ausführungsvariante im Längsschnitt. Fig.9 zeigt ein Detail im Schnitt.

Bei der Ausführungsform nach Fig.1 ist der mit Warmwasser zu heizende Heizkörper als zweiteiliger Heizkörper, nämlich als Doppelplattenheitkörper ausgebildet und hat eine zum Anschluß der beiden die Heizkörperteile bildenden Heizplatten und des Heizkörperventiles 1 dienende Armatur 2. Diese Armatur 2 weist einen Zustromkanal 3 für das Warmwasser auf, an den sich eine Verteilerkammer 4 anschließt, an welche mittels quer zum Zustromkanal 3 verlaufender Stutzen 5 die beiden Heizplatten des Heizkörpers angeschlossen sind. An der dem Zustromkanal 3 gegenüberliegenden Seite der Verteilerkammer 4 ist an diese ein koaxial zum Zustromkanal 3 verlaufender Anschlußstutzen 6 für das Heizkörperventil 1 vorgesehen. Dieser Anschlußstutzen 6 hat ein Innengewinde 7, in welches das Außengewinde eines Einsatzkörpers 8 des Ventiles 1 eingeschraubt ist. Eine in eine Ringnut 9 des Einsatzkörpers 8 eingelegte Ringdichtung 10 bewirkt die nötige Abdichtung zwischen den Bauteilen 6,8. In den Einsatzkörper 8 ist eine Hülse 11 eingeschraubt und mittels einer Ringdichtung 12 abgedichtet. Diese Hülse 11 dient als Führung für den mittels eines nicht dargestellten Thermostatkopfes verstellbaren Stössel 13 des Verschlußkörpers 14, der mit einem Ventilsitz 15 zusammenwirkt und eine Ringdichtung 16 und an seinem inneren Ende einen kurzen Drosselkegel 17 trägt. Der Ventilsitz 15 ist am Einsatzkörper 8 vorgesehen, und zwar am äußeren Ende eines mit dem Restteil des Einsatzkörpers 8 einstückigen Fortsatzes 18, der mit seinem inneren Ende in den Zustromkanal 3 gleitend eingreift und gegenüber diesem mittels einer Ringdichtung 19 abgedichtet ist. Der Fortsatz 18 bildet also einen die Verteilerkammer 4 durchsetzenden, gegenüber dieser Kammer abgedichteten Zuleitungsteil, mit welchem das durch den Zustromkanal 3 zuströmende Heizmedium zum Ventilsitz 15 geführt wird. Die Durchflußöffnung 20 des Ventilsitzes 15 ist von einer Rückleitung 21 umgeben, welche bei geöffnetem Verschlußkörper 14 das aus dem Zustromkanal 3 zuströmende Heizmedium nach Passieren der Durchflußöffnung 20 in die Verteilerkammer 4 zurückführt. Bei der Ausführungsform nach den Fig.1 und 2 ist diese Rückleitung 21 von mehreren Bohrungen 22 gebildet, die in gleichmäßigen Abständen voneinander im Material des Einsatzkörpers 8 rings um die Durchflußöffnung 20 angeordnet sind und in axialer Richtung des Einsatzkörpers 8 verlaufen. Am äußeren Ende der Bohrungen 22 befindet sich eine Kammer 23, die rotationssymmetrisch zur Achse des Einsatzkörpers 8 ausgebildet ist und als Verteilerraum für die aus der Durchflußöffnung 20 zufließende Flüssigkeit für die Bohrungen 22 dient und zugleich den nötigen Spielraum für die axiale Bewegung des Verschlußkörpers 14 zwischen der Schließ- und der Offenstellung bzw. umgekehrt bereitstellt. Eine gleichmäßige Verteilung der Heizflüssigkeit auf die Bohrungen 22 ergibt sich durch die rotationssymmetrische, zur Achse des Einsatzkörpers koaxiale Gestalt der Kammer 23, aber auch dadurch, daß die sich zwischen dem Drosselkegel 17 und der Innenwand des Fortsatzes 18 bildende Durchflußöffnung 20 ringförmig ist, da die Bauteile 8,14,17,18 rotationssymmetrisch sind und auch die Aufteilung der Bohrungen 22 über den Umfang des Einsatzkörpers 8 gleichmäßig ist (Fig.2). In Sonderfällen kann von der gleichmäßigen Aufteilung der Bohrungen abgewichen werden, etwa wenn eine bevorzugte Anströmung bestimmter Teile der Verteilerkammer 4 angestrebt ist.

In der Hülse 11 befindet sich eine Feder, welche den Verschlußkörper 14 in die Offenstellung zu drücken trachtet. Die Überführung in die Schließstellung erfolgt durch Druck auf den Stössel 13 von Thermostaten aus.

Das Gewinde 7, mit welchem der Einsatzkörper 8 im Anschlußstutzen 6 befestigt ist, befindet sich bei der dargestellten Ausführungsform auf halber Höhe desselben und ist verhältnismäßig kurz ausgebildet. Es kann aber an jede beliebige Stelle des Anschlußstutzens 6 verlegt und mit jeder beliebigen Länge ausgebildet werden, da zwischen der Position dieses Gewindes 7 und der Position des Ventilsitzes 15 kein Zusammenhang besteht. Der Ventilsitz 15 kann daher weit nach außen verlegt werden, was einer Verkürzung des vom Thermostaten zu betätigenden Stössels 13 und damit einer Verringerung der vom Thermostaten zu bewegenden Masse gleichkommt. Die Einarbeitung der Bohrungen 22 von der ebenen, kreisringförmigen inneren Stirnfläche 24 des Einsatzkörpers 8 her bereitet keine Schwierigkeiten, denn geeignete Bohrwerkzeuge stehen zur Verfügung. Im vorliegenden Fall beginnen die Bohrungen 22 etwa auf der Höhe des Gewindes 7, sind jedoch länger als dieses, so daß der Ventilsitz 15 deutlich außerhalb des Bereiches des Gewindes liegt. Im dargestellten Ausführungsbeispiel sind sechs Bohrungen 22 vorgesehen. Diese Anzahl kann jedoch auch größer oder kleiner sein. Je mehr solche Bohrungen vorgesehen sind, desto gleichmäßiger ist die Einleitung des Heizmediums von der Kammer 23 in den Ringraum 25 zwischen der Innenwand des Anschlußstutzens 8 und der Außenwand des Fortsatzes 18. Der Durchmesser der Bohrungen 22 kann verhältnismäßig groß gewählt werden (Fig.2). Es spielt keine Rolle, wenn - etwa bedingt durch Herstellungstoleranzen - die Bohrungen stellenweise das Gewinde 7 berühren, da ja die Ringdichtung 10 weiter außen liegt als das Gewinde 7.

Der Einsatzkörper 8 und die Hülse 11 sind zur Erleichterung des Einschraubens mit Sechskanten 26 versehen. Zusätzlich hiezu trägt der Einsatzkörper 8 ein Außengewinde 27, auf welches ein üblicher, nicht dargestellter Thermostatkopf zur Betätigung des Stössels 13 aufgeschraubt werden kann, oder - nach Abnahme dieses Thermostatkopfes - eine Wechselvorrichtung bekannter Bauart, mit welcher es möglich ist, Innenbauteile des Heizkörperventils 1 unter Druck zu wechseln, also ohne die Anlage entleeren zu müssen. Dadurch ist es z.B. problemlos möglich, von einer Art des Drosselkegels 17 auf eine andere Art eines Drosselkegels oder - wie Fig.4 zeigt - auf einen zylindrischen Drosselkörper 28 überzugehen. Dadurch läßt sich der Durchströmquerschnitt der Durchflußöffnung 20 bei geöffnetem Ventil ändern, also eine andere Voreinstellung als zuvor erreichen.

Das innere Ende des Fortsatzes 18 muß nicht passend in der es aufnehmenden Bohrung des Zustromkanales 3 sitzen. Es genügt, wenn die Ringdichtung 19 gewährleistet, daß keine Flüssigkeit unmittelbar vom Zustromkanal 3 in die Verteilerkammer 4 fließen kann.

Bei der Ausführungsvariante nach Fig.3 sind statt der Bohrungen 22 mehrere um den Umfang des Einsatzkörpers 8 in gleichmäßigen Abständen verteilte, sich in Axialrichtung des Einsatzkörpers 8 erstreckende Längsnuten 29 vorgesehen, die sich leicht in die Mantelfläche des Einsatzkörpers 8 einarbeiten lassen, z.B. durch Fräsen. Wenn vermieden werden soll, daß die Nuten 29 das Gewinde 7 unterbrechen, so kann - wie bereits erwähnt - das Gewinde 7 weiter außerhalb angeordnet werden als der Bereich, über welchen sich die Nuten 29 erstrecken, d.h. der Ventilsitz 15 liegt dann weiter innen als das Gewinde 7.

Selbstverständlich läßt sich die erwähnte Auswechselung der Drosselkörper 17 bzw. 28 - ebenso wie die Verwendung anders gearteter Drosselkörper - auch bei der Ausführungsform nach Fig. 3 durchführen.

Die Ausführungsform nach Fig.5 hat einen unabhängig vom Verschlußkörper 14 höhenverstellbaren Voreinstellkörper 30, der als den Verschlußkörper 14 umgebende Kappe ausgebildet ist, deren dem Fortsatz 18 zugewendete, ebene Stirnfläche 30' mit der kegelförmig ausgebildeten Stirnfläche des Fortsatzes 18 zusammenwirkt, welche den Ventilsitz 15 bildet. Der Voreinstellkörper 30 ist mittels eines Gewindes 31 in der Hülse 11 höhenverstellbar und trägt hiefür an seinem äußeren Stirnende 33 einen Innensechskant 32 oder einen Schlitz, so daß die Verstellung mittels eines entsprechenden Schlüssels leicht durchführbar ist. Um eine unbeabsichtigte Verstellung zu vermeiden, ist eine Kappe 34 vorgesehen, die mit einem Innengewinde auf den obersten, aus der Hülse 11 herausstehenden Abschnitt des Gewindes 31 des Voreinstellkörpers 30 aufschraubbar ist und so eine Kontermutter bildet. Das kappenförmige innere Endes des Voreinstellkörpers 30 ist rotationssymmetrisch ausgebildet und daher arbeitssparend herstellbar.

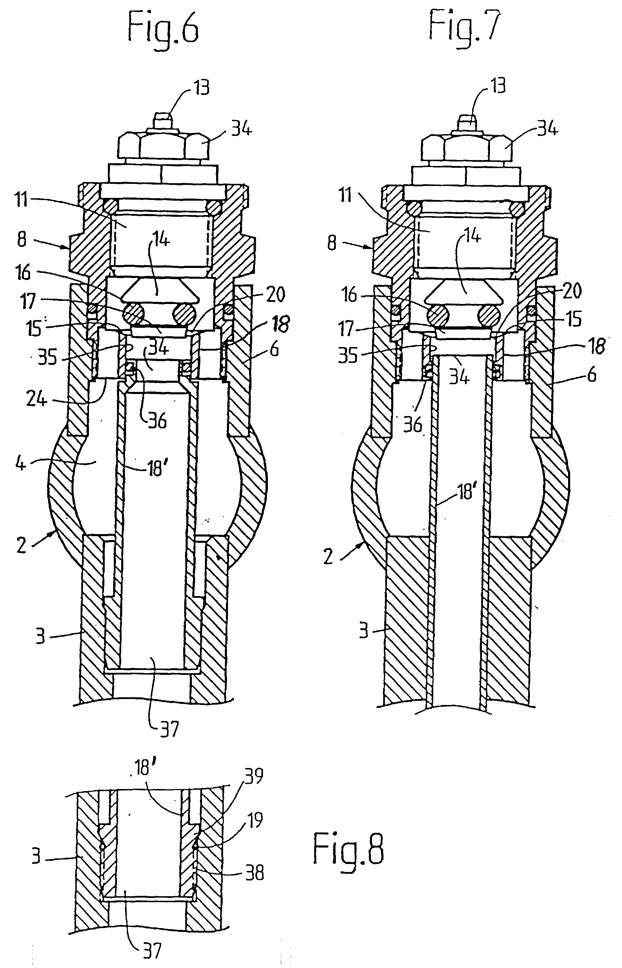

Die Ausführungsformen nach den Fig.6, 7 und 8 ähneln jener nach Fig.1, jedoch ist der Fortsatz 18 nicht einstückig mit dem Einsatzkörper 8 ausgebildet, sondern hat eine Verlängerung 18' in Form eines Rohres, das mit seinem äußeren Stirnende 34 in eine axiale Bohrung 35 des inneren Stirnendes 24 des Einsatzkörpers 8 in diesen eingesetzt ist. Eine Ringdichtung 36 bewirkt die nötige Abdichtung zwischen der Verlägerung 18' und dem Einsatzkörper 8, so daß die durch die Verlängerung 18' zugeführte Heizflüssigkeit durch die Durchlußöffnung 20 strömen muß. Bei der Ausführungsform nach Fig. 6 ist die Ringdichtung 36 in eine Ringnut des Stirnendes 34 des Rohres eingesetzt, bei der Ausführungsform nach Fig. 7 in eine Ringnut in der Bohrung 35. Bei den Ausführungsformen nach den Fig.6 und 8 ist das innere Ende 37 der Verlängerung 18' des Fortsatzes 18 dichtend und axial unverschiebbar in den Zustromkanal 3 eingesetzt. Hiezu ist gemäß Fig.6 dieses Stirnende 37 dichtend in die entsprechende Bohrung des Zustromkanales 3 eingepreßt. Gemäß Fig.8 hingegen ist das Ende 37 der Verlängerung 18' des Fortsatzes 18 mit einem Gewinde 38 versehen und in ein entsprechendes Innengewinde im Zustromkanal 3 eingeschraubt. Die Ringdichtung 19 bewirkt die nötige Abdichtung zwischen Zustromkanal 3 und der Verlängerung 18' und stützt sich gegen eine Verbreiterung 39 des Endes 37 ab. Die Ringdichtung 19 kann durch ein Dichtmittel, das in das Gewinde 38 eingebracht wird, ersetzt werden.

Bei der Ausführungsform nach Fig.7 ist die Verlängerung 18' des Fortsatzes 18 vom Zustromkanal 3 selbst gebildet. Diese Ausführungsform eignet sich insbesondere für solche Anlagen, bei denen eine Armatur vorgesehen ist, in welcher ein Rohr von einem in der Regel unten am Heizkörper angeordneten Einlauf für das Heizmedium zu einem in der Regel oben am Heizkörper angeordneten Heizkörperventil führt. Die Verlängerung 18' des Fortsatzes 18 ist hiebei von diesem Rohr gebildet, so daß ein gesonderter Bauteil eingespart werden kann.

Ebenso wie bei den anderen dargestellten Ausführungsformen, sind auch die Ausführungsformen nach den Fig.6 bis 8 unempfindlich auf allfällige Herstellungs- bzw. Montagetoleranzen der Armatur 2. So können Ungenauigkeiten bezüglich der koaxialen Lage des Anschlußstutzens 6 in Bezug auf den Zustromkanal 3 leicht durch die Dichtung 19 (bei den Ausführungsformen nach den Fig.l bis 5) bzw. die Ringdichtung 36 (bei den Ausführungsformen nach den Fig. 6 bis 8) aufgefangen werden.

Wie bereits erwähnt, erleichtert die ebene Ausbildung der Stirnfläche 24 des Einsatzkörpers die Einarbeitung der Bohrungen 22. Um zu vermeiden, daß bei Ausführungsformen, bei welchen der Fortsatz 18 einstückig mit dem Einsatzkörper 8 ausgebildet ist, radial nach außen gerichtete Vorsprünge des Fortsatzes 18 die Einarbeitung der Bohrungen 22 erschweren, kann die Ausbildung nach Fig.9 getroffen werden. Dort ist der Außendurchmesser des Fortsatzes 18 überall höchstens so groß wie der Durchmesser jenes Kreises, welcher koaxial zur Achse des Einsatzkörpers 8 liegt und die Bohrungen 22 an ihrem der Achse des Einsatzkörpers 8 nächstgelegenen Umfangsabschnitt tangiert. An seinem dem Einsatzkörper 8 abgewendeten Ende hat der Fortsatz 18 eine Absetzung, auf welche die Ringdichtung 19 zwischen zwei Scheiben 40,41 aufgesetzt ist. Die dem Einsatzkörper 8 näherliegende Scheibe 40 stützt sich gegen das Ende der Absetzung ab, die andere Scheibe 41 ist von einem Federring od.dgl. gebildet, welcher in eine Vertiefung der Absetzung einschnappt, oder diese Scheibe 41 ist von einer Auswärtsbördelung des Endes des Rohres des Fortsatzes 18 gehalten.

Selbstverständlich ist die Anwendung des Ventiles nicht auf Doppelplattenheizkörper beschränkt. Es braucht ja die Verteilerkammer 4 lediglich einseitig geschlossen zu werden, um eine zum Anschluß an einen Einplattenheizkörper geeignete Armatur 2 zu erhalten. In ähnlicher Weise ist der Anschluß an einen Gliederheizkörper möglich, etwa analog zur Ausbildung nach der AT-321.512.

Das Ventil 1 muß nicht unbedingt thermostatbetätigt sein. Die erfindungsgemäße Konstruktion läßt sich vielmehr mit gleichen Vorteilen auch für handbetätigte Ventile anwenden.

## Patentansprüche

1. Heizkörperventil zum Anschluß an einen Anschlußstutzen (6) eines Heizkörpers oder einer das Heizmedium zu zumindest einem Heizkörperteil führenden Armatur, mit einem am Anschlußstutzen (6) anschraubbaren Einsatzkörper (8), der einen in seinem Inneren angeordneten Ventilsitz (15) umgibt, mit welchem ein, vorzugsweise thermostatisch betätigter, Verschlußkörper (14) zusammenwirkt, wobei der Ventilsitz (15) und der Verschlußkörper (14) rotationssymmetrisch zur Achse des Einsatzkörpers (8) ausgebildet sind und bei geöffnetem Ventil einen ringförmigen Austrittsspalt für das Heizmedium begrenzen, durch welchen das Heizmedium in eine im Einsatzkörper (8) vorgesehene, den Verschlußkörper (14) aufnehmende Kammer (23) strömt, und wobei das Heizmedium dem Ventilsitz (15) über einen zur Achse des Einsatzkörpers (8) koaxialen, hohlen, den Ventilsitz (15) bildenden Fortsatz (18) des Einsatzkörpers (8) aus einem Zustromkanal (3) des Heizkörpers bzw. der Armatur zugeleitet wird, und wobei das Heizmedium aus der Kammer (23) durch eine im Einsatzkörper (8) vorgesehene Rückleitung (21) in axialer Richtung des Einsatzkörpers (8) in eine Verteilerkammer (4) zwischen Anschlußstutzen (6) und Fortsatz (18) bzw. einer Verlängerung (18') desselben geleitet wird, dadurch gekennzeichnet, daß die Kammer (23) rotationssymmetrisch zur Achse des Einsatzkörpers (8) ausgebildet ist, wobei mehrere, rund um den Ventilsitz (15) um den Umfang desselben verteilte, die Rückleitung (21) bildende axiale Kanäle (22,29) im Material des Einsatzkörpers (8) in die Verteilerkammer (4) münden.

2. Heizkörperventil nach Anspruch 1, dadurch gekennzeichnet, daß die Kanäle von Bohrungen (22) gebildet sind.

3. Heizkörperventil nach Anspruch 1 oder 2, dadurch gekennzeichnet, daß die Kanäle (22,29) sich über die Länge eines Gewindes (7) hinaus erstrecken, mit welchem der Einsatzkörper (8) in den Anschlußstutzen (6) eingeschraubt ist und daß der Verschlußkörper (14) in Bezug auf das außenseitige Ende dieses Gewindes (7) nach außen versetzt ist.

4. Heizkörperventil nach Anspruch 3, dadurch gekennzeichnet, daß der Ventilsitz (15) im Bereich des äußersten Drittels des Anschlußstutzens (6) angeordnet ist.

5. Heizkörperventil nach Anspruch 1 oder 2, dadurch gekennzeichnet, daß der Ventilsitz (15) und die Kanäle (22,29) weiter innen angeordnet sind als ein Gewinde (7), mit welchem der Einsatzkörper (8) im Anschlußstutzen (6) befestigt ist.

6. Heizkörperventil nach einem der Ansprüche 1 bis 5, dadurch gekennzeichnet, daß ein im Einsatzkörper (8) in axialer Richtung bewegbarer Voreinstellkörper (17,28,30) vorgesehen ist und daß dieser Voreinstellkörper rotationssymmetrisch in Bezug auf die Achse des Einsatzkörpers (8) ausgebildet ist.

7. Heizkörperventil nach Anspruch 6, dadurch gekennzeichnet, daß der Voreinstellkörper von einem in die Durchflußöffnung (20) des Ventilsitzes (15) hineinragenden, am Verschlußkörper (14) vorgesehenen Drosselkörper (17,29), z.B. einem zylindrischen Fortsatz oder einem Kegelstumpf, gebildet ist.

8. Heizkörperventil nach Anspruch 6, dadurch gekennzeichnet, daß der Voreinstellkörper (30) von einer unabhängig vom Verschlußkörper (14) bewegbaren Kappe gebildet ist, deren dem Ventilsitz (15) zugewendete, mit dem Ventilsitz (15) zusammenwirkende, den Verschlußkörper (14) umgebende Stirnfläche (30') ringförmig geschlossen ausgebildet ist.

9. Heizkörperventil nach einem der Ansprüche 1 bis 8, dadurch gekennzeichnet, daß der Fortsatz (18) einstückig mit seinem dem Einsatzkörper (8) abgewendeten Ende (37) dichtend in den Zustromkanal (3) eingreift.

10. Heizkörperventil nach Anspruch 9, dadurch gekennzeichnet, daß der maximale Außenradius des Fortsatzes (18) gleich oder geringer ist als der Abstand zwischen der Achse des Einsatzkörpers (8) und dem der Achse nächstliegenden Wandteil der Bohrungen (22).

11. Heizkörperventil nach Anspruch 10, dadurch gekennzeichnet, daß der Fortsatz (18) rohrförmig ausgebildet und an seinem inneren Ende mit einer Absetzung versehen ist, auf die eine Ringdichtung (19) zwischen zwei sie haltenden Scheiben (40,41) aufgesetzt ist.

12. Heizkörperventil nach einem der Ansprüche 1 bis 8, dadurch gekennzeichnet, daß ein die Verlängerung (18') des Fortsatzes (18) bildendes Rohr unverschiebbar, z.b. durch ein abgedichtetes Gewinde (38), Einpressung oder Schweißung, mit dem Zustromkanal (3) verbunden ist oder das Ende des Zustromkanales (3) bildet und mit seinem dem Einsatzkörper (8) zugewendeten Ende (34) in einer zentralen, zum Ventilsitz (15) führenden Bohrung (35) des Fortsatzes (18) längsverschiebbar abgedichtet geführt ist.

13. Heizkörperventil nach einem der Ansprüche 1 bis 12, dadurch gekennzeichnet daß der Ventilsitz (15), sowie eine Kupplung, insbesondere ein Gewinde (7), zum Anschluß an den Anschlußstutzen (6), und eine weitere Kupplung, insbesondere ein Gewinde (27), zum Anschluß eines Thermostatkopfes oder einer Wechselvorrichtung, am selben einstückigen Einsatzkörper (8) angeordnet sind.

14. Heizkörperventil nach einem der Ansprüche 1 bis 13, dadurch gekennzeichnet, daß die Kanäle (22,29) um den Umfang des Ventilsitzes (15) gleichmäßig verteilt sind.

## Claims

1. Heating-radiator valve for connection to a connection piece (6) of a heating radiator or a fitting which guides the heating medium to at least one heating-radiator portion, having an insert body (8) which can be screwed onto the connection piece (6) and surrounds a valve seat (15) which is arranged in its interior and with which there cooperates a closing body (14) which is preferably thermostatically operated, wherein the valve seat (15) and the closing body (14) are formed so as to be rotationally symmetrical relative to the axis of the insert body (8) and, when the valve is open, delimit an annular outlet gap for the heating medium, through which gap the heating medium flows into a chamber (23) which is provided in the insert body (8) and accommodates the closing body (14), and wherein the heating medium is directed to the valve seat (15) out of an inflow channel (3) of the heating radiator or the fitting by way of a hollow projection (18) of the insert body (8) which is coaxial to the axis of the insert body (8) and forms the valve seat (15), and wherein the heating medium is directed out of the chamber (23) through a return line (21), which is provided in the insert body (8), in an axial direction of the insert body (8) into a distributor chamber (4) between the connection piece (6) and the projection (18) or an extension (18') of the same, characterised in that the chamber (23) is formed so as to be rotationally symmetrical relative to the axis of the insert body (8), in which case several axial channels (22, 29), which are distributed about the valve seat (15), about the periphery of the same, and form the return line (21), in the material of the insert body (8) run into the distributor chamber (4).

2. Heating-radiator valve according to claim 1, characterised in that the channels are formed by bores (22).

3. Heating-radiator valve according to claim 1 or 2, characterised in that the channels (22, 29) extend beyond the length of a thread (7) with which the insert body (8) is screwed into the connection piece (6), and in that the closing body (14) is offset outwards in relation to the exterior end of this thread (7).

4. Heating-radiator valve according to claim 3, characterised in that the valve seat (15) is arranged in the region of the outermost third of the connection piece (6).

5. Heating-radiator valve according to claim 1 or 2, characterised in that the valve seat (15) and the channels (22, 29) are arranged further inside than a thread (7) with which the insert body (8) is secured in the connection piece (6).

6. Heating-radiator valve according to one of the claims 1 to 5, characterised in that a pre-adjustment body (17, 28, 30), which is movable in an axial direction in the insert body (8), is provided, and in that this pre-adjustment body is formed so as to be rotationally symmetrical in relation to the axis of the insert body (8).

7. Heating-radiator valve according to claim 6, characterised in that the pre-adjustment body is formed by a restrictor (17, 28), for example a cylindrical projection or a truncated cone, which projects into the through-flow opening (20) of the valve seat (15) and is provided at the closing body (14).

8. Heating-radiator valve according to claim 6, characterised in that the pre-adjustment body (30) is formed by a cap which can be moved independently of the closing body (14) and of which the end face (30'), which faces the valve seat (15), cooperates with the valve seat (15) and surrounds the closing body (14), is formed so as to be annularly closed.

9. Heating-radiator valve according to one of the claims 1 to 8, characterised in that the projection (18), in one piece together with its end (37) that is remote from the insert body (8), engages in a sealing manner into the inflow channel (3).

10. Heating-radiator valve according to claim 9, characterised in that the maximum radius of the projection (18) is equal to or less than the distance between the axis of the insert body (8) and the wall portion of the bores (22) lying closest to the axis.

11. Heating-radiator valve according to claim 10, characterised in that the projection (18) is formed in a tubular manner and at its inner end is provided with a shoulder onto which a ring seal (19) is set between two discs (40, 41) which hold the ring seal.

12. Heating-radiator valve according to one of the claims 1 to 8, characterised in that a tube which forms the extension (18') of the projection (18) is connected with the inflow channel (3) in a non-displaceable manner, for example by means of a sealed thread (38), indentation or welding, or forms the end of the inflow channel (3) and is guided with its end (34) that faces the insert body (8) in a longitudinally displaceable and sealed manner in a central bore (35) of the projection (18) that leads to the valve seat (15).

13. Heating-radiator valve according to one of the claims 1 to 12, characterised in that the valve seat (15) and also a coupling, in particular a thread (7), for connection to the connection piece (6), and a further coupling, in particular a thread (27), for connection of a thermostat head or a change-over arrangement, are arranged on the same one-piece insert body (8).

14. Heating-radiator valve according to one of the claims 1 to 13, characterised in that the channels (22, 29) are uniformly distributed around the periphery of the valve seat (15).

## Revendications

1. Vanne pour corps de chauffe, en vue du rattachement à un manchon de raccordement (6) d'un corps de chauffe ou d'une robinetterie délivrant le fluide de chauffage à au moins une partie du corps de chauffe, comportant un corps intégré (8) vissable sur le manchon de raccordement (6) et entourant un siège d'obturation (15) situé dans son espace interne, et avec lequel coopère un corps obturateur (14) actionné de préférence thermostatiquement ; vanne dans laquelle le siège d'obturation (15) et le corps obturateur (14) sont réalisés à symétrie de rotation par rapport à l'axe du corps intégré (8) et délimitent, lorsque la vanne est ouverte, un interstice annulaire de sortie du fluide de chauffage, par lequel ledit fluide de chauffage afflue dans une chambre (23) prévue dans le corps intégré (8) et recevant le corps obturateur (14) ; dans laquelle le fluide de chauffage est dirigé vers le siège d'obturation (15), à partir d'un canal respectif d'arrivée (3) du corps de chauffe ou de la robinetterie, en empruntant un appendice creux (18) du corps intégré (8), qui forme le siège d'obturation (15) et est coaxial à l'axe du corps intégré (8) ; et dans laquelle le fluide de chauffage provenant de la chambre (23) est admis dans le sens axial du corps intégré (8), par l'intermédiaire d'un conduit de retour (21) prévu dans ledit corps intégré (8), dans un compartiment répartiteur (4) situé entre le manchon de raccordement (6) et, respectivement, l'appendice (18) ou un prolongement (18') de ce dernier, caractérisée par le fait que la chambre (23) est réalisée à symétrie de rotation par rapport à l'axe du corps intégré (8), plusieurs canaux axiaux (22, 29) pratiqués dans le matériau du corps intégré (8), formant le conduit de retour (21) et répartis périphériquement autour du siège d'obturation (15), sur le pourtour de celui-ci, débouchant dans le compartiment répartiteur (4).

2. Vanne pour corps de chauffe, selon la revendication 1, caractérisée par le fait que les canaux sont formés par des alésages (22).

3. Vanne pour corps de chauffe, selon la revendication 1 ou 2, caractérisée par le fait que les canaux (22, 29) s'étendent au-delà de la longueur d'un filetage (7) par lequel le corps intégré (8) est vissé dans le manchon de raccordement (6) ; et par le fait que le corps obturateur (14) est décalé vers l'extérieur par rapport à l'extrémité externe de ce filetage (7).

4. Vanne pour corps de chauffe, selon la revendication 3, caractérisée par le fait que le siège d'obturation (15) se trouve dans la région du tiers le plus extérieur du manchon de raccordement (6).

5. Vanne pour corps de chauffe, selon la revendication 1 ou 2, caractérisée par le fait que le siège d'obturation (15) et les canaux (22, 29) occupent des positions situées davantage à l'intérieur que celle d'un filetage (7) par lequel le corps intégré (8) est fixé dans le manchon de raccordement (6).

6. Vanne pour corps de chauffe, selon l'une des revendications 1 à 5, caractérisée par le fait qu'un corps de préréglage (17, 28, 30), mobile dans le sens axial, est prévu dans le corps intégré (8) ; et par le fait que ce corps de préréglage est réalisé à symétrie de rotation par rapport à l'axe du corps intégré (8).

7. Vanne pour corps de chauffe, selon la revendication 6, caractérisée par le fait que le corps de préréglage est formé par un corps d'étranglement (17, 29), par exemple un appendice cylindrique ou un tronc de cône, prévu sur le corps obturateur (14) et s'engageant dans l'orifice de passage (20) du siège d'obturation (15).

8. Vanne pour corps de chauffe, selon la revendication 6, caractérisée par le fait que le corps de préréglage (30) est formé par une coiffe mobile indépendamment du corps obturateur (14) et dont la face extrême (30'),qui est tournée vers le siège d'obturation (15), coopère avec ledit siège d'obturation (15) et entoure le corps obturateur (14), est de réalisation annulaire fermée.

9. Vanne pour corps de chauffe, selon l'une des revendications 1 à 8, caractérisée par le fait que l'appendice (18) pénètre d'un seul tenant dans le canal d'arrivée (3), de manière étanche, par son extrémité (37) tournée à l'opposé du corps intégré (8).

10. Vanne pour corps de chauffe, selon la revendication 9, caractérisée par le fait que le rayon extérieur maximal de l'appendice (18) est égal ou inférieur à la distance comprise entre l'axe du corps intégré (8), et la zone de paroi des alésages (22) qui est la plus proche dudit axe.

11. Vanne pour corps de chauffe, selon la revendication 10, caractérisée par le fait que l'appendice (18) est de réalisation tubulaire et est pourvu, à son extrémité interne, d'un décrochement sur lequel une garniture annulaire d'étanchement (19) est placée entre deux disques (40, 41) assurant sa retenue.

12. Vanne pour corps de chauffe, selon l'une des revendications 1 à 8, caractérisée par le fait qu'un tube matérialisant le prolongement (18') de l'appendice (18) est relié rigidement au canal d'arrivée (3), par exemple par l'intermédiaire d'un filetage colmaté (38), par emmanchement à force ou par soudage, ou bien forme l'extrémité du canal d'arrivée (3) et est guidé à coulissement longitudinal de manière étanche, par son extrémité (34) tournée vers le corps intégré (8), dans un trou central (35) dudit appendice (18) qui mène au siège d'obturation (15).

13. Vanne pour corps de chauffe, selon l'une des revendications 1 à 12, caractérisée par le fait que le siège d'obturation (15) et un accouplement, notamment un filetage (7) conçu pour le rattachement au manchon de raccordement (6), ainsi qu'un accouplement supplémentaire, en particulier un filetage (27) destiné au raccordement d'une tête thermostatique ou d'un dispositif sélecteur, sont agencés sur le même corps intégré monobloc (8).

14. Vanne pour corps de chauffe, selon l'une des revendications 1 à 13, caractérisée par le fait que les canaux (22, 29) sont uniformément répartis autour du pourtour du siège d'obturation (15).
